# EUROPEAN PATENT APPLICATION

(11) **EP 4 631 394 A2**
(43) Date of publication of application: **15.10.2025**
(21) Application number: 25163959.7
(22) Date of filing: 14.03.2025
(51) Int. Cl.: A47C 7/62, A47C 31/02

(54) **SEATING APPARATUS WITH ACCESSORY RAIL SYSTEM**

(30) Priority: 22.03.2024 US 202463568609 P; 07.03.2025 US 202519073896
(71) Applicant: Illinois Tool Works Inc., Glenview IL 60025 (US)
(72) Inventor: SMITH, Samuel, Glenview, IL 60025 (US); OOMEN, Craig Martin, Glenview, IL 60025 (US)
(74) Representative: HGF

(57) **Abstract**

Disclosed is a seating apparatus to removably couple with one or more accessories. The seating apparatus includes a back support assembly having a back frame and a rail system configured to removably couple with and support the one or more accessories. The back frame defines a backrest opening. The rail system can comprise a rail track that is formed about an entire perimeter of the backrest opening.

## Description

### RELATED APPLICATIONS

The present application claims priority to United States Provisional Patent Application No. 63/568,609, filed March 22, 2024, and entitled "Seating Apparatus with Accessory Rail System," which is hereby incorporated by reference in its entirety.

### BACKGROUND

Comfort in seating often manifests in one of multiple ways. Firstly, seating with minimal compliance can be comfortable, such as hard-backed chairs designed to conform to a typical user's body shape. Secondly, seating can lack engineered contours but offer excellent compliance, as seen in foam-padded seating. Suspension or suspended fabrics have emerged as a common alternative to hard surfaces and foam padding in seating.

Engineered suspension fabric surfaces can deliver the comfort of foam padding at a weight akin to hard plastic seating and at relatively low cost. Notably, suspension fabric seating enhances comfort through preset tension in the fabric, adjustable for meeting comfort goals, providing zonal tension across the seating surface. Housed within a curved frame, this design adds stylistic flair and ergonomic profiling conducive to reclining movements. An example of such seating apparatus utilizing suspension fabrics is detailed in the commonly owned U.S. Patent 11,452,380, titled "Seat Comprising Suspension Fabric with Compression Limiters."

Despite advancements to date in terms of comfort, there is a need for an improved seating apparatus that allows for easy user- and/or customer- customization or modification, such as easily mounting accessories and the like for particular use cases.

### SUMMARY

The present disclosure generally relates to a rail system, substantially as illustrated by and described in connection with at least one of the figures, as set forth more completely in the claims. For example, the present disclosure provides a seating apparatus with a rail system for mounting accessories and the like.

### BRIEF DESCRIPTION OF THE DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1a illustrates a rear perspective view of a first seating apparatus having a rail system in accordance with an aspect of this disclosure.
Figure 1b illustrates a rear perspective view of a seating apparatus having a rail system in accordance with an aspect of this disclosure.
Figures 2a and 2b illustrate cross-sectional views of a frame of a back support assembly taken along cut line A-A (Figure 1A).
Figure 2c illustrates a cross-sectional view of a frame of a back support assembly taken along cut line B-B (Figure 1A).
Figure 3a illustrates a rear perspective view of a headrest assembly in accordance with an aspect of this disclosure.
Figure 3b illustrates a cross-sectional view of an interface between the headrest assembly and the frame of the back support assembly in accordance with an aspect of this disclosure.
Figure 4a illustrates a front perspective view of a cup-holder assembly in accordance with an aspect of this disclosure.
Figure 4b illustrates a cross-sectional view of an interface between the cup-holder assembly and the frame of the back support assembly in accordance with an aspect of this disclosure.
Figure 5a illustrates a front perspective view of a charge port assembly in accordance with an aspect of this disclosure.
Figure 5b illustrates a cross-sectional view of an interface between the charge port assembly and the frame of the back support assembly in accordance with an aspect of this disclosure.
Figures 6a and 6b illustrate, respectively, front and rear perspective views of another seating apparatus having a rail system in accordance with an aspect of this disclosure.
Figure 7a illustrates a front perspective view of another seating apparatus having a rail system in accordance with an aspect of this disclosure.
Figure 7b illustrates a front perspective view of another seating apparatus having a rail system in accordance with an aspect of this disclosure.

### DETAILED DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

The present disclosure is directed to a rail system featuring an attachment mechanism for accommodating various removable accessories and other components. As seating technology evolves over time, standardizing features can reduce or eliminate future engineering changes for integrating new features or technologies. Currently, each design requires a unique attachment design for integrating a feature or accessory. Engineering changes, however, are expensive and have long lead times, thus the seating industry needs a solution that future proofs features and technologies.

The disclosed rail system allows users to easily attach and detach accessories as needed, providing flexibility and convenience in various environments. The rail system described herein provides a practical and versatile solution for attaching accessories, such as headrests, cup holders, charge ports, to a seating apparatus. The rail system and secure attachment mechanism offer convenience, stability, and compatibility across diverse applications. While generally illustrated and described in connection with a seating apparatus, the rail system can be used with various objects and, therefore, a rail track may be mounted on various objects, including but not limited to vehicles, furniture, baby strollers, bicycles, and exercise equipment.

In one example, axxxxxxln some examples, the seating apparatus is an office chair, a stadium seat, or a vehicular seat.

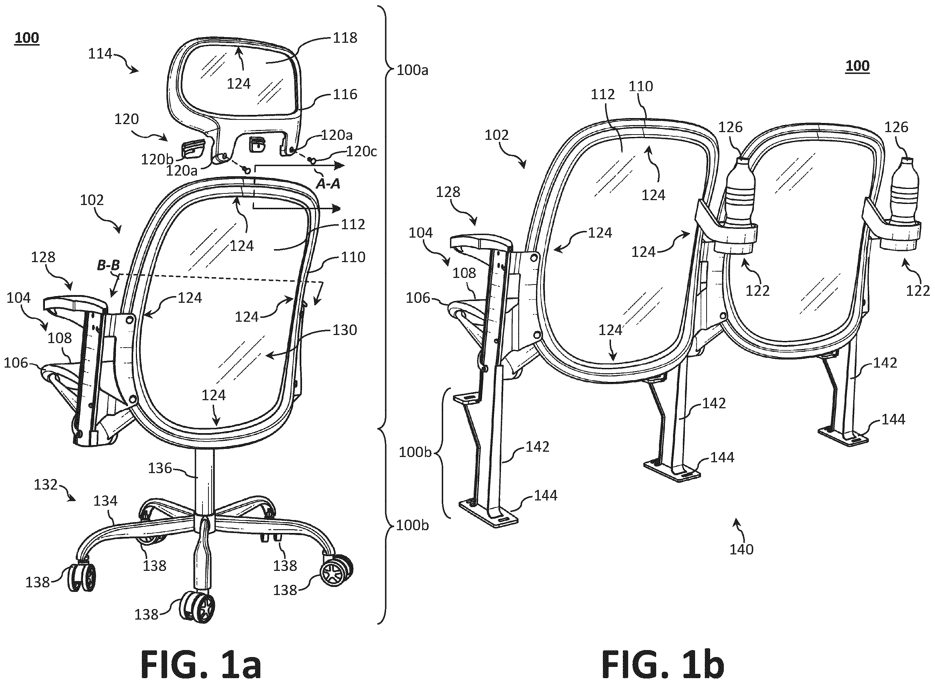

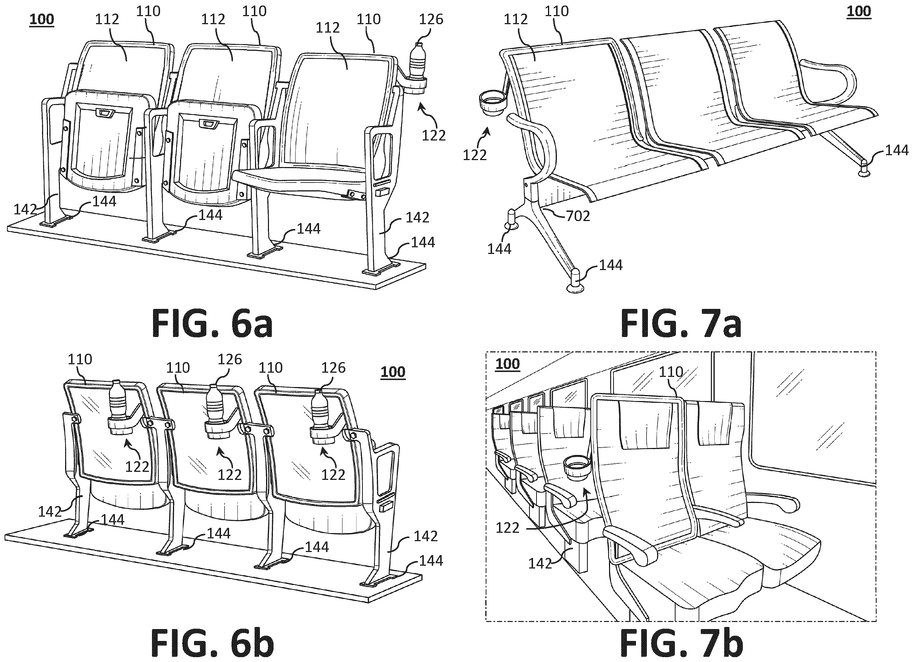

Figures 1a and 1b illustrate example seating apparatus 100 having a rail system 124 in accordance with an aspect of this disclosure. As will be appreciated, the rail system 124 enables a standardized attachment design that enables accessory attachment and, in some cases, can be configured to hide wire harness and communication conductors from view and to protect such conductors from tampering and abuse wear. For example, Figure 1a illustrates a rear perspective view of a first seating apparatus 100 having a wheeled base 132 and Figure 1b illustrates a rear perspective view of a seating apparatus 100 having a stationary base 140. Additional examples are illustrated and described in connection with Figures 6a, 6b, 7a, and 7b. The seating apparatus 100 generally comprises a seat section 100a and a support section 100b.

The illustrated seating apparatus 100 generally comprises a seat assembly 104 and a back support assembly 102. In some examples, the seating apparatus 100 further comprises a headrest assembly 114, a cup-holder assembly 122, a charge port assembly 500, and one or more armrests 128. The headrest assembly 114, the cup-holder assembly 122, and/or the charge port assembly 500 are removeably coupled to the rail system 124 of the seating apparatus 100 via one or more attachment mechanisms 120. The seat assembly 104 and the back support assembly 102 may be adjustable relative to one another (e.g., the angle at which they are arranged) and to the ground (e.g., the height between seat assembly 104 and the ground).

Depending on the application, the seat assembly 104 and the back support assembly 102 can be supported relative to the ground via, for example, via a wheeled base 132 or a stationary base 140. For example, the seating apparatus 100 can be an office chair that uses a wheeled base 132 composed of a frame 134, a plurality of wheels 138, and a hydraulic chair cylinder 136. Additionally, the seating apparatus 100 may be configured to adjust between various ergonomic positions. In another example, the seating apparatus 100 can comprise a stationary base 140, which can comprise one or more supports 142 (e.g., legs, frame structures, or the like) and feet 144 (e.g., gliders, sliders, brackets, foot plates, etc.). In some examples, the seating apparatus 100 may be fixed to the ground at the foot 144 (e.g., via one or more tracks or fasteners, such as bolts). By way of illustration, the seating apparatus 100 may be fixed to the ground in the context of vehicular installations as illustrated in Figure 7b (e.g., planes, trains, buses, cars, and the like) or public venue installations as illustrated in Figures 1b, 6a, and 6b (e.g., stadium seating, theater seating, and the like). Therefore, the disclosed rail system 124 can be applied in various industries where there is a need for better suspension seating integration, such as vehicular applications, residential use, public spaces, large venues (e.g., stadiums and arenas), places of worship, educational institutions, casinos, offices, and the like.

The illustrated back support assembly 102 comprises a back frame 110 that generally defines a backrest opening 130, which can be oval, quadrilateral (e.g., rectangular, square, etc.), or other desired shapes. A suspension seating fabric can be stretched or otherwise span the backrest opening 130 to define a backrest support surface 112. The backrest support surface 112 can be secured to the back frame 110 along a perimeter of the backrest support surface 112 (e.g., the entirely of its perimeter).

In this example, the back frame 110 is configured to define or otherwise serve as the rail system 124,which is configured to be compatible with a wide range of objects and accessories such that end-users can customize their setups by attaching various accessories as desired. That is, the rail system 124 can be integrally formed with the back frame 110.

Each of the one or more attachment mechanisms 120 can be provided as a first bracket 120a that is fixed to (e.g., integrated with, part of, or otherwise attached) an accessory and a second bracket 120b that is complimentary to the first bracket 120a. The first bracket 120a and the second bracket 120b are configured to sandwich and clamp (via a fastener 120c, for example) the rail system 124. In some examples, the first bracket 120a and the second bracket 120b can be hingedly coupled to one another in a clamshell arrangement to ease installation.

The illustrated seat assembly 104 comprises a seat frame 106 that generally defines a seat opening, which can be oval, quadrilateral, or other desired shapes. A suspension seating fabric can be stretched or otherwise span the seat opening to define a seat support surface 108. Like the backrest support surface 112, the seat support surface 108 can be secured to the seat frame 106 along a perimeter of the seat support surface 108 (e.g., the entirely of its perimeter).

The illustrated headrest assembly 114 comprises a headrest frame 116 that generally defines a headrest opening, which can be oval, quadrilateral, or other desired shapes. A suspension seating fabric can be stretched or otherwise span the headrest opening to define a head support surface 118. The head support surface 118 can be secured to the headrest frame 116 along a perimeter of the head support surface 118 (e.g., the entirely of its perimeter).

In some examples, the seat frame 106 and/or the headrest frame 116 can also be configured to define or otherwise serve as a rail system 124 to enable end-users to attach various accessories to the seat assembly 104 (e.g., an under-seat fire extinguisher, life vest, etc.) and/or to the headrest assembly 114 (e.g., to attach headphones). The back frame 110, the seat frame 106, and/or the headrest frame 116 can be fabricated using or more durable materials such as plastic, metal, or composite materials.

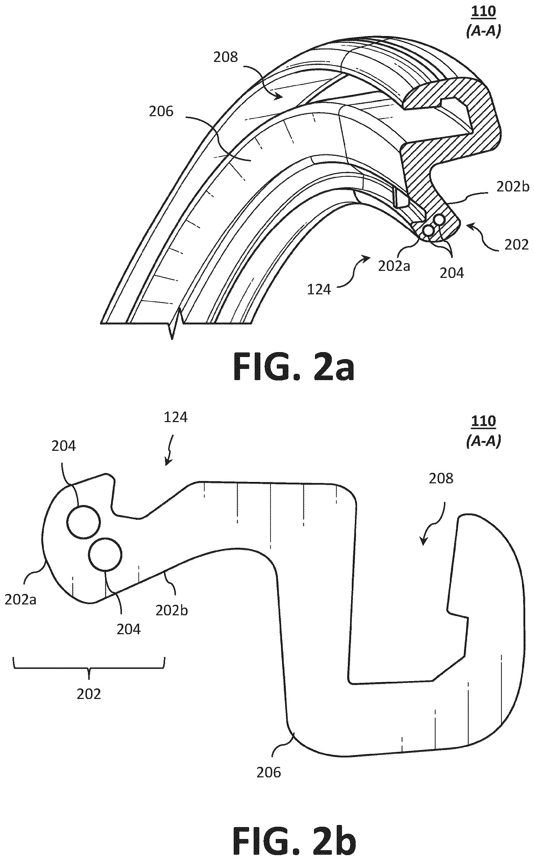

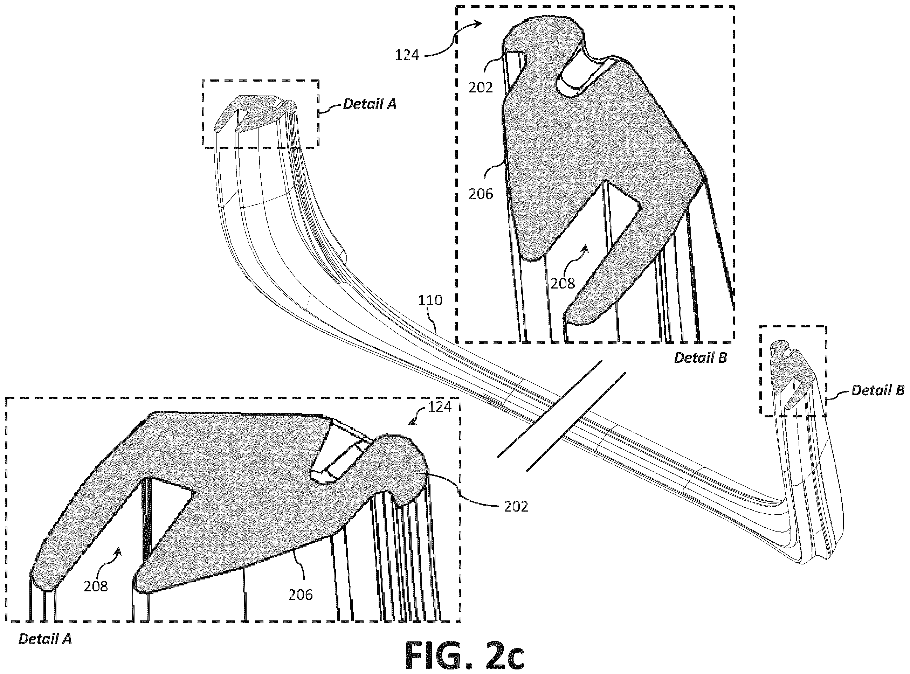

Figures 2a and 2b illustrate cross-sectional views of a back frame 110 of a back support assembly 102 taken along cut line A-A (Figure 1A) showing the rail system 124 and a rail track 202 thereof in accordance with an aspect of this disclosure, while Figure 2c illustrates a cross-sectional view of a back frame 110 of a back support assembly 102 taken along cut line B-B (Figure 1A).

As illustrated, the rail system 124 may be or can comprise a rail track 202 positioned along the perimeter of the backrest opening 130. In the illustrated example, the rail track 202 is formed about an entire perimeter of the backrest opening 130. The rail track 202 provides a convenient way to customize and enhance the functionality of the seating apparatus 100 by allowing users to attach accessories to the backrest assembly 102 or elsewhere.

Various accessories can be easily attached to the backrest assembly 102 using the rail track 202 and one or more attachment mechanisms 120. These accessories include headrest assemblies 114, cup-holder assemblies 122, charge port assemblies 500, head restraints, trays, phone chargers (both wired and wireless), book supports (e.g., for religious texts), kick plates, skid plates for telescopic structures, entertainment screens (similar to those found in automobiles), waste and rubbish containers/bags, food containers, toys, books, comfort protection, barcodes, and venue digital information. Additionally, the seating apparatus can allow for chair-to-chair connections (e.g., for row seating), lumbar support assemblies, gaming controllers, computers, local interconnect network (LIN) communication modules, piezoelectric modules for massage and enhanced comfort, heating and cooling modules, and ductwork for forced air aiming features. These accessories enhance the versatility and functionality of the seating apparatus, catering to a wide range of user preferences and needs.

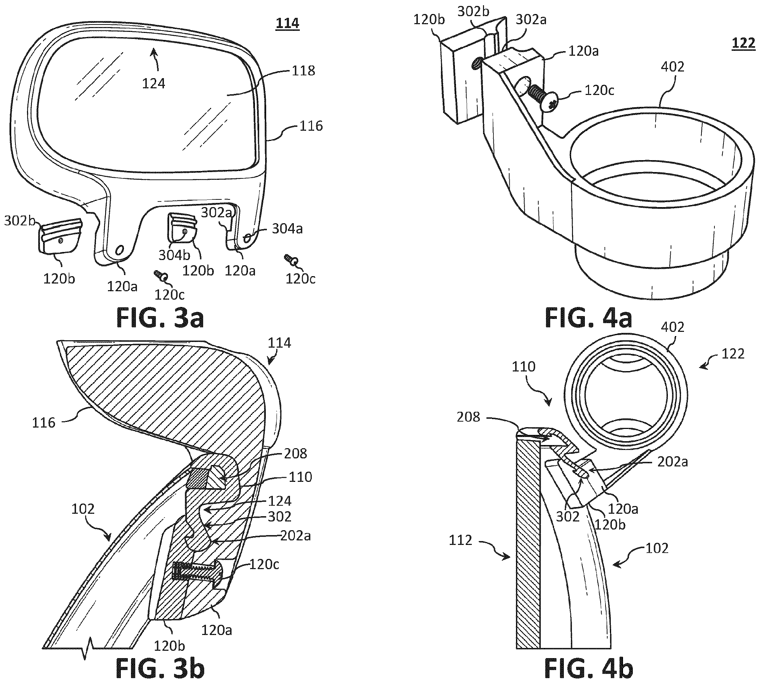

As best illustrated in Figures 2a through 2c, the back frame 110 generally comprises a main body 206 having a rail track 202 positioned on a first side (the exterior side of the back frame 110) and a fabric slot 208 positioned on a second side (the interior side of the back frame 110). The fabric slot 208 is configured to secure the perimeter of the suspension seating fabric to define a back support surface 112 (an example of which is illustrated in Figure 3b). The cross-sectional profile of the rail track 202 of the back frame 110 may be substantially the same about the perimeter of the backrest opening 130 to, for example, allow for the attachment of accessories at any location about the perimeter of the backrest opening 130. In this example, the attachment mechanism 120 generally employs a C-shape clamping design theme. The illustrated rail track 202 comprises a bulb portion 202a with a generally circular or oval cross section that is coupled to and spaced from the main body 206 via a neck portion 202b. The bulb portion 202a allows for accessories to be repositioned at any location about the perimeter of the backrest opening 130.

In some examples, the rail track 202 may further comprise a series of attachment point features along the perimeter to mitigate slippage or sliding along the rail track 202. The attachment point features can be positioned or formed in or on the bulb portion 202a and/or the neck portion 202b. The attachment point features may be, for example, slots, bumps, or other features to increase friction along the rail track 202 to mitigate slippage of the attachment mechanism 120 relative to the rail track 202. In examples where the attachment point features are omitted, the exterior surface of the rail track 202 is substantially smooth along the perimeter.

The described rail system 124 offers a number of advantages, including versatility, convenience, stability, and compatibility. The rail system 124 accommodates a variety of accessories, allowing users to customize their setups for different purposes. The attachment mechanism enables quick and easy installation and removal of accessories, enhancing user convenience. The secure fastening mechanism ensures that attached accessories remain firmly in place during use, preventing accidents or spills. The rail system 124 is compatible with a wide range of objects and accessories, offering flexibility in diverse applications.

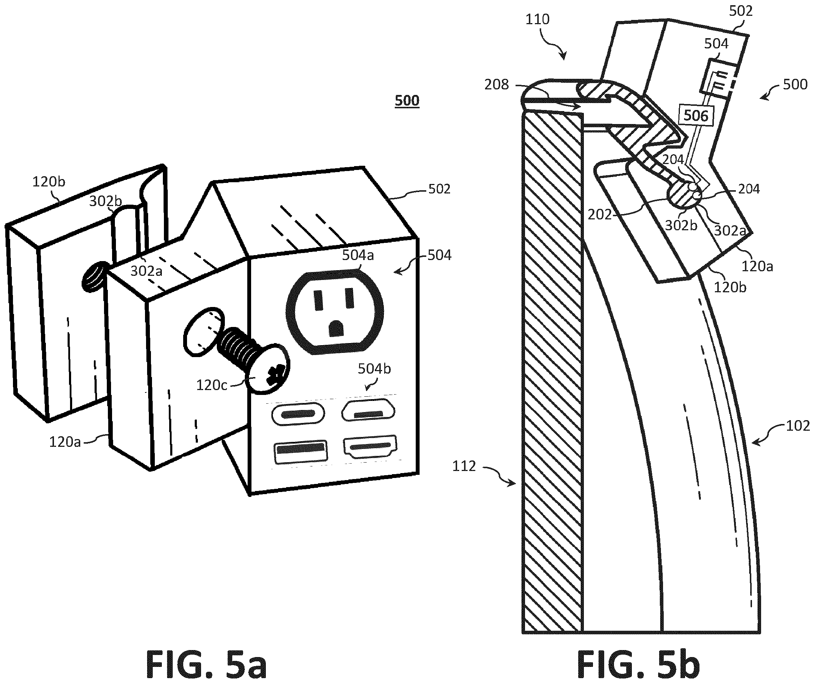

In certain scenarios, the rail track 202 (such as the bulb portion 202a) and/or the attachment mechanism 120 can incorporate electrical conductors 204 to enable electrification (e.g., for charging) and data communication. For example, with reference to Figures 2a and 2b, the bulb portion 202a may contain embedded electrical conductors 204 that are incorporated or formed during the molding process of the back frame 110. This integration allows the suspension frame resin to encapsulate the conductor(s) 204, enhancing durability and resistance to weathering and misuse. In this setup, as will be discussed in connection with the example of Figures 5a and 5b, when the attachment mechanism 120 is fully clamped, it can establish contact with the electrical conductor 204 in the bulb portion 202a, effectively pinching the bulb portion 202a. To prevent unintended grounding or shorting, positive and negative electrical conductors 204 are electrically isolated. Additionally, multiple electrical conductors 204 may be embedded to support functions such as Local Interconnect Network (LIN), Universal Serial Bus (USB), or multi-wire digital communication (e.g., Ethernet 8-wire systems).

Figure 3a illustrates a rear perspective view of a headrest assembly 114 in accordance with an aspect of this disclosure, while Figure 3b illustrates a cross-sectional view of an interface between the headrest assembly 114 and the back frame 110 of the back support assembly 102 in accordance with an aspect of this disclosure.

The attachment mechanism 120 is configured to securely fasten an accessory to the rail track 202, preventing unintended detachment or slippage during use. In this example, the attachment mechanism 120 comprises a first bracket 120a and a second bracket 120b configured to sandwich and clamp (via a fastener 120c, for example) the bulb portion 202a of the rail track 202. To that end, the first bracket 120a comprises a first recess 302a and the second bracket 120b 302b comprises a second recess 302b that, that, when assembled, cooperate to define a channel 302 that generally corresponds to the exterior shape of the bulb portion 202a in a clamping arrangement. While illustrated using a clamping arrangement having a threaded fastener 120c, the attachment mechanism 120 may incorporate locking features, such as spring-loaded pins, latches, or the like, to ensure a stable connection between the attachment mechanism 120 of an accessory and the rail track 202. To easy assembly, the first bracket 120a can be attached to the second bracket 120b via, for example, a living hinge to form a clamshell arrangement.

Figure 4a illustrates a front perspective view of a cup-holder assembly 122 in accordance with an aspect of this disclosure, while Figure 4b illustrates a cross-sectional view of an interface between the cup-holder assembly 122 and the back frame 110 of the back support assembly 102 in accordance with an aspect of this disclosure.

The cup-holder assembly 122 is configured to securely hold cups, bottles, and similar containers, enhancing the usability of objects equipped with the rail system 124, thus offering ease of use and adaptability in diverse applications. The cup-holder assembly 122 is configured to be removably mounted on the rail track 202. The cup-holder assembly 122 includes a cup-holder component 402 with a cavity or holder for accommodating a vessel 126 (e.g., cups, bottles, or other containers). The cup-holder assembly 122 further comprises an attachment mechanism 120 that engages with the rail track 202, such as a point along the rail track 202 and/or attachment points or slots formed in or on the rail track 202.

Figure 5a illustrates a front perspective view of a charge port assembly 500 in accordance with an aspect of this disclosure, while Figure 5b presents a cross-sectional schematic view of the interface between the charge port assembly 500 and the back frame 110 of the back support assembly 102.

The charge port assembly500 is configured to provide power through one or more charge ports 504, enabling users to charge or power electrical devices. These charge ports 504 can be configured to supply either AC or DC power, drawing source power from the rail track 202 or an alternative source (e.g., a wall plug connected to the mains). For example, the charge ports 504 may include an AC outlet 504a (e.g., a 120VAC or 240VAC outlet) and/or a DC outlet 504b (e.g., a 5VDC universal serial bus (USB) port, barrel plug, etc.). In some examples, the charge port assembly 500 can additionally or alternatively provide data communication via one or more of the charge ports 504. For example, DC outlet 504b (e.g., in the case of USB), may also be configured to communicate data between a user device and the seating apparatus 100.

The source power can then be converted or inverted to deliver the desired current, voltage, and power type (AC or DC) through charge circuitry 506. The charge circuitry 506 may utilize buck (step-down) and boost (step-up) converters, as well as a buck-boost converter, which can both step up and step-down voltage. For AC and DC conversions, inverters convert DC to AC, rectifiers convert AC to DC, and AC-AC converters modify AC voltage or frequency.

The charge port assembly 500 also includes an attachment mechanism 120 that engages with the rail track 202 at a designated point or via attachment points or slots formed on the rail track 202. The assembly is configured for removable mounting on the rail track 202. It features a housing 502 with an internal cavity to accommodate the charge circuitry 506 and retain the charge ports 504, where applicable. The charge port assembly 500 receives power from positive and negative electrical conductors 204 embedded in the rail track 202. In some examples, at least a portion of the electrical conductors 204 may be flush with the surface of the rail track 202 or include an electrical bridge between the electrical conductors 204 and a contact at the surface of the rail track 202 (e.g., a metal contact pad), allowing the charge port assembly 500 to electrically connect to the electrical conductors 204 via contacts position on an internal surface of the attachment mechanism 120 (e.g., on the first bracket 120a along or in the first recess 302a), such as pogo pins or other electrical connectors.

Figures 6a and 6b illustrate front and rear perspective views, respectively, of another seating apparatus 100 featuring a rail system 124 in accordance with an aspect of this disclosure. The seating apparatus 100, shown in Figures 6a and 6b, includes seats with a foldable seat design similar to that of Figure 1b but accommodates three seats. As can be appreciated, additional seats can be added based on, for example, the width of a row in venues such as stadiums, theaters, or similar settings.

Figure 7a illustrates a front perspective view of another seating apparatus 100 with a rail system 124, in accordance with this disclosure. In this example, the seating apparatus 100 is configured as a bench-style seating arrangement, where a single frame structure 702 supports multiple seats. This configuration makes it suitable for locations such as airports, waiting rooms, and similar environments. Additionally, the feet 144 can be configured as sliders or gliders, enabling easy movement of the seating apparatus 100 to facilitate room rearrangement when necessary.

Figure 7b illustrates a front perspective view of another seating apparatus 100 featuring a rail system 124, in accordance with this disclosure. In this example, the seating apparatus 100 is configured as a reclinable seat, secured to the floor via on or more supports 142 and a floor rail or floor plate integrated into the vehicle's flooring. While the illustrated example depicts a train, other vehicle applications are also considered, including cars, trucks, buses, watercraft (e.g., boats, yachts, ships), and aircraft. A single frame structure 702 supports multiple seats, making this design applicable to airports, waiting rooms, and similar settings.

The above-cited patents and patent publications are hereby incorporated by reference in their entirety. While the present device and/or system have been described with reference to certain implementations, it will be understood by those skilled in the art that various changes may be made, and equivalents may be substituted without departing from the scope of the present device and/or system. In addition, many modifications may be made to adapt a particular situation or material to the teachings of the present disclosure without departing from its scope. For example, components of disclosed examples may be combined, divided, re-arranged, and/or otherwise modified. Therefore, the present device and/or system are not limited to the particular implementations disclosed. Instead, the present device and/or system will include all implementations falling within the scope of the appended claims, both literally and under the doctrine of equivalents.

Certain embodiments of the invention are described in the following clauses:
Clause 1. A seating apparatus configured to removably couple with one or more accessories, the seating apparatus comprising:
   a back support assembly having a back frame; and
   a rail system configured to removably couple with and support the one or more accessories via a rail track,
      wherein the rail track comprises a bulb portion coupled to and spaced from a main body of the rail system via a neck portion.
Clause 2. The seating apparatus of clause 1, wherein the rail track comprises one or more conductors embedded in at least partially within the bulb portion.
Clause 3. The seating apparatus of clause 2, wherein the rail system is configured to supply power to the one or more accessories via the one or more conductors.
Clause 4. The seating apparatus of clause 1, wherein the back frame defines a backrest opening.
Clause 5. The seating apparatus of clause 4, wherein the rail track that is formed about an entire perimeter of the backrest opening.
Clause 6. The seating apparatus of clause 1, wherein the rail system is integral with the back frame.
Clause 7. The seating apparatus of clause 1, wherein the one or more accessories includes a cup-holder assembly.
Clause 8. The seating apparatus of clause 1, wherein the one or more accessories includes a charge port assembly.
Clause 9. The seating apparatus of clause 8, wherein the charge port assembly is configured to receive power via one or more conductors embedded in at least partially within the rail track.
Clause 10. The seating apparatus of clause 8, wherein the charge port assembly comprises one or more charge ports.
Clause 11. The seating apparatus of clause 10, wherein the one or more charge ports includes an AC outlet.
Clause 12. The seating apparatus of clause 10, wherein the one or more charge ports includes a DC outlet.
Clause 13. The seating apparatus of clause 1, wherein the one or more accessories includes a headrest assembly.
Clause 14. The seating apparatus of clause 1, wherein the seating apparatus comprises a wheeled base.
Clause 15. The seating apparatus of clause 1, wherein the seating apparatus comprises a stationary base.
Clause 16. A back support assembly for a seating apparatus that is configured to removably couple with one or more accessories, the back support assembly comprising:
   a back frame defines a backrest opening and a suspension seating fabric stretched to cover the backrest opening; and
   a rail system integral with the back frame and configured to removably couple with and support the one or more accessories via a rail track,
      wherein the rail track is formed about an entire perimeter of the backrest opening.
Clause 17. The back support assembly of clause 16, wherein the rail track comprises a bulb portion coupled to and spaced from a main body of the rail system via a neck portion.
Clause 18. The back support assembly of clause 16, wherein the rail track comprises one or more conductors embedded in at least partially within the rail track and configured to supply power to the one or more accessories via the one or more conductors.
Clause 19. The back support assembly of clause 18, wherein the one or more accessories includes a charge port assembly configured to receive power via one or more conductors embedded in at least partially within the rail track.
Clause 20. A back support assembly for a seating apparatus that is configured to removably couple with one or more accessories, the back support assembly comprising:
   a back frame defines a backrest opening and a suspension seating fabric stretched to cover the backrest opening; and
   a rail system integral with the back frame and configured to removably couple with and support the one or more accessories via a rail track,
      wherein the rail track comprises one or more conductors embedded in at least partially within the rail track and configured to supply power to the one or more accessories via the one or more conductors.

## Claims

1. A seating apparatus configured to removably couple with one or more accessories, the seating apparatus comprising:
a back support assembly having a back frame; and
a rail system configured to removably couple with and support the one or more accessories via a rail track,
wherein the rail track comprises a bulb portion coupled to and spaced from a main body of the rail system via a neck portion.

2. The seating apparatus of claim 1, wherein the rail track comprises one or more conductors embedded in at least partially within the bulb portion, and optionally
wherein the rail system is configured to supply power to the one or more accessories via the one or more conductors.

3. The seating apparatus of claim 1 or claim 2, wherein the back frame defines a backrest opening, and optionally
wherein the rail track that is formed about an entire perimeter of the backrest opening.

4. The seating apparatus of any one of claims 1 to 3, wherein the rail system is integral with the back frame.

5. The seating apparatus of any one of claims 1 to 4, wherein the one or more accessories includes a cup-holder assembly.

6. The seating apparatus of any one of claims 1 to 5, wherein the one or more accessories includes a charge port assembly.

7. The seating apparatus of claim 6, wherein the charge port assembly is configured to receive power via one or more conductors embedded in at least partially within the rail track.

8. The seating apparatus of claim 6 or claim 7, wherein the charge port assembly comprises one or more charge ports, and optionally
wherein the one or more charge ports includes an AC outlet, and/or
wherein the one or more charge ports includes a DC outlet.

9. The seating apparatus of any one of claims 1 to 8, wherein the one or more accessories includes a headrest assembly.

10. The seating apparatus of any one of claims 1 to 9, wherein the seating apparatus comprises a wheeled base.

11. The seating apparatus of any one of claims 1 to 10, wherein the seating apparatus comprises a stationary base.

12. A back support assembly for a seating apparatus that is configured to removably couple with one or more accessories, the back support assembly comprising:
a back frame defines a backrest opening and a suspension seating fabric stretched to cover the backrest opening; and
a rail system integral with the back frame and configured to removably couple with and support the one or more accessories via a rail track,
wherein the rail track is formed about an entire perimeter of the backrest opening.

13. The back support assembly of claim 12, wherein the rail track comprises a bulb portion coupled to and spaced from a main body of the rail system via a neck portion.

14. The back support assembly of claim 12 or claim 13, wherein the rail track comprises one or more conductors embedded in at least partially within the rail track and configured to supply power to the one or more accessories via the one or more conductors, and optionally
wherein the one or more accessories includes a charge port assembly configured to receive power via one or more conductors embedded in at least partially within the rail track.

15. A back support assembly for a seating apparatus that is configured to removably couple with one or more accessories, the back support assembly comprising:
a back frame defines a backrest opening and a suspension seating fabric stretched to cover the backrest opening; and
a rail system integral with the back frame and configured to removably couple with and support the one or more accessories via a rail track,
wherein the rail track comprises one or more conductors embedded in at least partially within the rail track and configured to supply power to the one or more accessories via the one or more conductors.
